# EUROPÄISCHE PATENTSCHRIFT

(11) **EP 0 563 211 B1**
(45) Veröffentlichungstag und Bekanntmachung des Hinweises auf die Patenterteilung: **16.04.1997**
(21) Anmeldenummer: 92902016.2
(22) Anmeldetag: 13.12.1991
(51) Int. Cl.: C08L 23/06, C08K 5/09, C08K 5/17

(54) **FORMMASSE UND VERFAHREN ZUM KALANDRIEREN VON FOLIEN AUF BASIS VON POLYETHYLEN**
MOULDING COMPOUND AND PROCESS FOR CALENDERING POLYETHYLENE-BASED FILMS
MATIERE MOULABLE ET PROCEDE DE CALANDRAGE DE FILMS A BASE DE POLYETHYLENE

(30) Priorität: 21.12.1990 DE 4041453
(43) Veröffentlichungstag der Anmeldung: 06.10.1993
(73) Patentinhaber: HT TROPLAST AG, D-53839 Troisdorf (DE)
(72) Erfinder: KLAAR, Karlo, D-5210 Troisdorf (DE); SIMM, Manfred, D-5210 Troisdorf (DE); SCHOEPE, Reiner, D-5210 Troisdorf (DE)
(86) Internationale Anmeldenummer: EP9102403
(87) Internationale Veröffentlichungsnummer: WO9211315

(56) Entgegenhaltungen:
- EP-A- 0 342 265
- DE-C- 3 240 338
- GB-A- 1 044 503
- US-A- 3 976 612
- US-A- 4 010 127

## Beschreibung

### Technisches Gebiet

Die Erfindung betrifft ein Verfahren zur Herstellung von Folien oder Platten aus Polyethylen hoher Dichte (HDPE) bzw. einer Mischung aus HDPE und Ethylen-Vinylacetat-Copolymerisat (EVA).

Folien oder Platten aus Polyolefinen werden in überwiegendem Maße unter Anwendung von Extrusionsverfahren hergestellt. Hingegen hat sich die Herstellung von Folien auf dem Kalander, die für andere Kunststoffe, wie PVC, große Bedeutung hat, bei Polyolefinen bisher in der Praxis nicht durchgesetzt.

### Stand der Technik

Aus der DE-C1 32 40 338, ist das Kalandrieren einer Polypropylen-Formmasse bekannt, wobei die Formmasse eine definierte Menge an Stabilisatoren und Verarbeitungshilfsmitteln und das Polypropylen einen bestimmten Schmelzindex (MFI), der einen bestimmten Minimalwert nicht unterschreiten darf, aufweisen muß.

Die DE-A1 30 32 851 betrifft ein ähnliches Verfahren für eine Mischung aus Polypropylen mit max. 25 % Polyethylen.

Aus der AT-PS 211 040 ist bekannt, daß man aus Polyolefinen unter Benützung eines Kalanders dann Folien oder Platten erhalten kann, wenn man die Oberflächen sämtlicher Kalanderwalzen auf einer Temperatur oberhalb des Kristallitschmelzpunktes hält, jede nachfolgende Kalanderwalze gegenüber der vorhergehenden mindestens im Verhältnis 1,1 : 1 voreilen läßt und die Arbeitsbedingungen am Kalander so abstimmt, daß die vor den Walzenspalten sich bildenden Knetkörper in sich rotieren. Dieses Verfahren ist in erster Linie für Polyethylen bestimmt, wobei offensichtlich Probleme auftreten, da Abzugswalzen mit Gummibelag empfohlen wurden. Außerdem weisen die so hergestellten Folien eine hohe monoaxiale Reckung sowie eine mangelhafte Oberflächenqualität auf. Wegen der großen Klebneigung von Polyethylen und der geringen Viskosität der Schmelze bei der Verarbeitungstemperatur konnte sich dieses Verfahren in der Praxis für Polyethylen-Formmassen nicht durchsetzen.

Aus der DE-A1 25 46 237 und der US-A 4,010,127 ist eine hochmolekulare Formmasse auf Basis von Polyolefinen bekannt, die zur Erreichung einer ausreichenden Verarbeitbarkeit Zusätze wie Polybuten, Mineralöl und/oder Epoxyplastifizierungsmitteln enthält. Diese Zusätze erhöhen den Schmelzindex der Masse.

### Aufgabe

Aufgabe der vorliegenden Erfindung ist es daher, ein Verfahren zur Herstellung von Folien auf Polyethylen-Basis durch Kalandrieren zur Verfügung zu stellen, wobei reproduzierbar qualitativ hochwertige Folien mit guter Oberflächenbeschaffenheit und geringer monoaxialer,Reckung hergestellt werden können.

### Darstellung der Erfindung

Die Erfindung löst diese Aufgabe durch die Merkmale des Anspruchs 1.

Die eingesetzte Formmasse weist einen für Polyethylen extrem niedrigen Schmelzindex MFI (190 °C/21,6 kg) auf, der < als 7 g/10 min und bevorzugt < als 6 g/10 min ist. Durch den Zusatz von 0,5 bis 3 Gew.-% Bisstearoylethylendiamin und/oder Metallsalzen von Carbonsäuren als Verarbeitungshilfsmittel kann der Schmelzindex auf maximal 10 g/10 min erhöht werden. Besonders gute Oberflächen werden erzielt, wenn die Formmasse einen Schmelzindex (190 °C/21,6 kg) < 6 g/10 min und einen Gehalt von 0,5 bis 3 Gew.-% Bisstearoylethylendiamin und/oder Metallsalzen von Carbonsäuren, insbesondere Kalziumstearat, als Verarbeitunghilfsmittel aufweist. Bevorzugt wird Bisstearoylethylendiamin eingesetzt.

Die Formmasse kann zusätzlich z. B. Gleitmittel, Stabilisatoren, Füllstoffe und Flammschutzmittel aufweisen, wobei füllstofffreie Formmassen (Füllstoffgehalte < 10 Gew.-%) bevorzugt werden.

Die Formmasse wird bei einer Temperatur von ca. 170 - 180 °C gemischt und plastifiziert, danach bei einer Temperatur von 175 - 190 °C zu einem Walzfell ausgewalzt und anschließend bei einer Temperatur < 190 °C kalandriert.

Mit dem erfindungsgemäßen Verfahren ist es möglich, einwandfreie ungefüllte Polyethylenfolien durch Kalandrieren mit guten Oberflächen ohne monoaxiale Reckung herzustellen. Ggf. können die kalandrierten, ungefüllten oder gefüllten Polyethylenfolien Antiioxidantien, UV-Absorber, Flammschutzmittel - um besonderen Anforderungen gerecht zu werden - enthalten. Es ist natürlich auch möglich, farbige Folien durch Verwendung von Pigmenten herzustellen.

Ein bevorzugtes Anwendungsgebiet für die ungefüllten Polyethylenfolien sind Abdichtungen in Erd- und Wasserbau für Grundwasserschutzmaßnahmen sowie zum Abdichten von Auffangwannen und Auffangräumen bei der Lagerung wassergefährdender Stoffe.

Ein bevorzugtes Anwendungsgebiet für die mit Füllstoffen versehenen kalandrierten Polyethylenfolien sind Verpackungen, Aktenhüllen, Verkleidungen, etc.

Die erfindungsgemäße Verarbeitung erfolgt bevorzugt in der Weise, daß die Masse beispielsweise als Einzelkomponenten oder als Vormischung in einem Innenmischer, einem Stempelkneter oder zweiwelligen Schneckenkneter o. ä. unter Erwärmung gemischt wird, bis die Masse teigig ist und eine Massetemperatur von etwa 175 - 185 °C aufweist. Diese Masse wird dann in einem zweiten Plastifizierungsschritt auf Walzen durch einen Walzenspalt zu Walzfellen ausgezogen, wobei die Walzen eine Temperatur von 170 - 190 °C, bevorzugt wenigstens 180 °C, aufweisen. Diese gut plastifizierten, homogenen Walzfelle werden dann dem Kalander zugeführt, wobei der Kalander wenigstens vier Walzen aufweisen sollte, die in der bekannten Form I, L, F oder Z angeordnet sein können.

Die Kalanderwalzen haben, in Arbeitsrichtung gesehen, leicht abfallende Temperaturen, wobei die ersten Einzugswalzen die höchste Temperatur, vorzugsweise 180 - 200 °C, aufweisen sollten, während die letzte Kalanderwalze eine um 20 - 30 °C niedrigere Temperatur haben kann, da sie im wesentlichen nur der Glättung und Kalibrierung dient.

Es können nach dem erfindungsgemäßen Verfahren bevorzugt Folien einer Dicke von 0,2 - 2,0 mm hergestellt werden, wobei Walzenabzugsgeschwindigkeiten und damit Produktionsgeschwindigkeiten von mind. 10 m/min und höher erreicht werden können, in Abhängigkeit von der Dicke der Folie.

### Wege zur Ausführung der Erfindung

Bei den nachfolgend aufgeführten, in der Tabelle dargestellten Beispielen wird aus den Komponenten die Masse gemischt und in einem Schneckenkneter anplastifiziert, bis eine Massetemperatur von 185 °C erreicht ist. Anschließend wird das Plastifikat auf einem Zweiwalzen-Walzwerk, dessen Walzen auf 180 - 185 °C geheizt sind, zu Walzfellen ausgezogen und danach auf einem Vierwalzen-Walzwerk zu einer 1 mm dicken Folie kalandriert, wobei die ersten beiden Walzen eine Temperatur von 195 °C, die dritte Walze eine Temperatur von 180 °C und die vierte Walze eine Temperatur von 175 °C aufweisen.

Als thermoplastische Kunststoffe wurden verwendet:
- HDPE1:: ein Polyethylen hoher Dichte mit extrem kleinem Schmelzindex MFI (190 °C/21,6 kg) von ca. 0,5 g/ 10 min (Lupolen ^{R} 5261 Z);
- HDPE2:: ein Polyethylen hoher Dichte mit geringem MFI (190 °C/21,6 kg) von 16 g/10 min;
- EVA:: ein Ethylen-Vinylacetat-Copolymerisat mit 18 Gew.-% VA-Anteil/Excorene ^{R} AG 0548;

Als Gleitmittel wurden Bisstearoylethylendiamin (Hostalub ^{R} FA1) bzw. Kalzium-Stearat (Ceasit ^{R}1 ) verwendet. In Beispiel 10 wurden 21 Gew.-% Aluminiumhydroxid (Martinal ^{R} OL 104 C) zugesetzt.

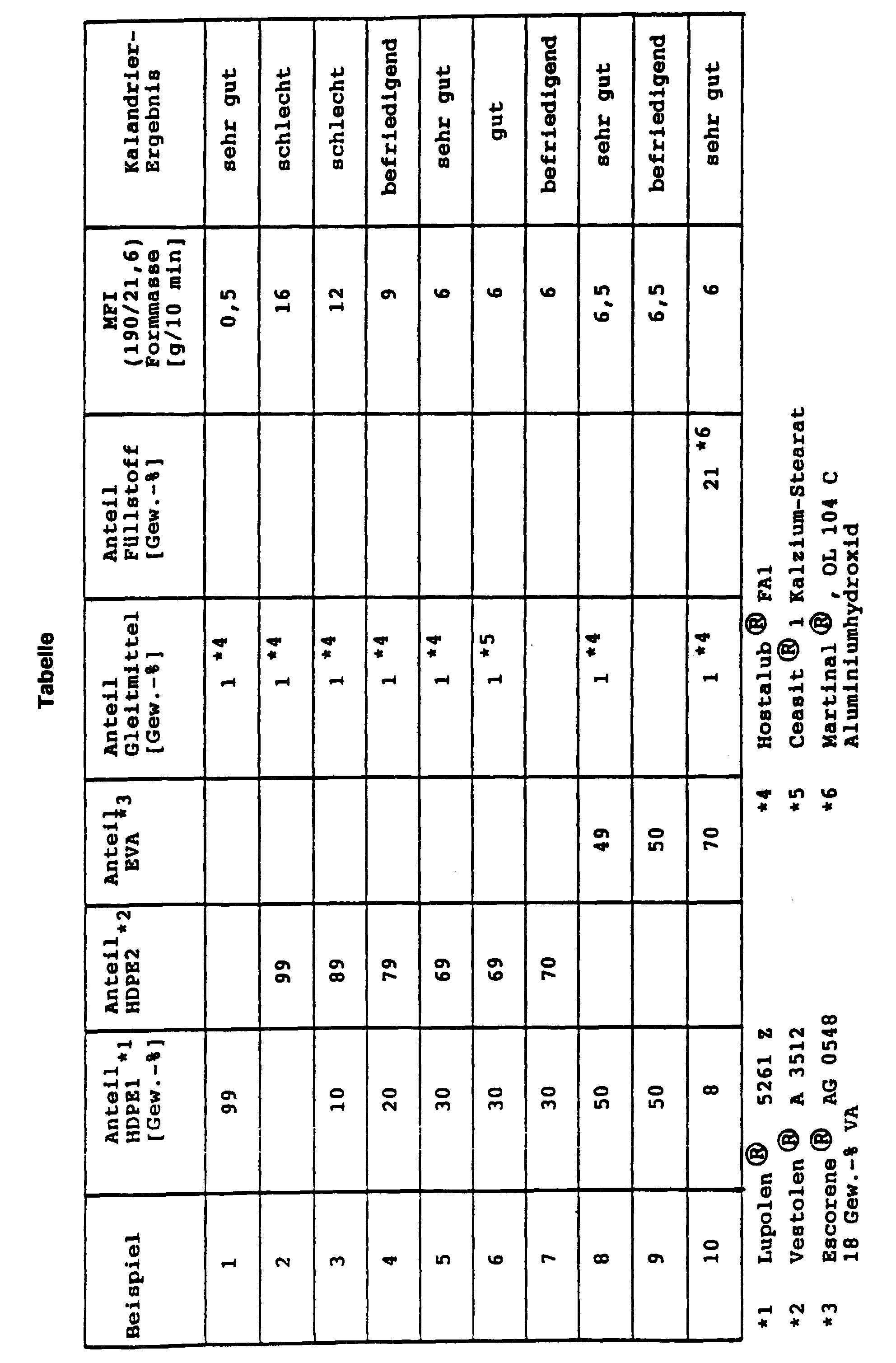

## Patentansprüche

1. Verfahren zur Herstellung von Follen oder Platten aus einer Formmasse bestehend überwiegend aus:
a₁) einem HDPE bzw. einer HDPE-Mischung oder
a₂) einer Mischung aus HDPE und EVA,
wobei die Formmasse
b₁) einen Schmelzindex MFI (190 °C/21,6 kg) nach DIN 53 735 von < 7 g/10 min oder
b₂) einen Schmelzindex MFI (190 °C/21,6 kg) nach DIN 53 735 von < 10 g/10 min und einen Gehalt von 0,5 bis 3 Gew.% Bisstearoylethylendiamin und/oder Metallsalzen von Carbonsäuren als Verarbeitungshilfsmittel aufweist, ***dadurch gekennzeichnet,*** daß die Formmasse bei einer Temperatur von ca. 170 - 180 °C gemischt und plastifiziert, danach bei einer Temperatur von 175 - 190 °C zu einem Walzfell ausgewalzt und anschließend kalandriert wird, wobei die erste Kalanderwalze eine Temperatur von 180 - 200 °C und die weiteren Kalanderwalzen abfallende Temperaturen aufweisen.

2. Verfahren nach Anspruch 1, ***dadurch gekennzeichnet,*** daß die Formmasse einen Schmelzindex (190 °C/21,6 kg) < 6 g / 10 min und einen Gehalt von 0,5 bis 3 Gew.-% Bisstearoylethylendiamin und/oder Metallsalzen von Carbonsäuren als Verarbeitungshilfsmittel aufweist.

3. Verfahren nach einem der Ansprüche 1 oder 2, ***dadurch gekennzeichnet,*** daß die Formmasse einen Füllstoffgehalt von < 10 Gew.-% aufweist.

4. Verfahren nach einem der Ansprüche 1 oder 2, ***dadurch gekennzeichnet,*** daß die Formmasse bis 30 Gew.-% Aluminiumhydroxid als Füllstoff enthält.

## Claims

1. Method for the manufacture of foils or plates from a moulding composition consisting predominately of:
a1) a HDPE or a HDPE mixture or
a2) a mixture of HDPE and EVA
with the moulding composition having
b1) a melt index MFI (190°C/21.6kg) according to DIN 53735 of < 7g/10 min or
b2) a melt index MFI (190°C/21.6kg) according to DIN 53735 of < l0g/l0 min
and a content of 0.5 to 3% by weight of bisstearoylethylenediamine and/or metal salts of carboxylic acids as processing aids, **characterised in that** the moulding composition is mixed and plasticized at a temperature of about 170°C to 180°C, is next rolled out to form a crude sheet at a temperature of 175°C to 190°C and is then calendered, with the first calendering roller having a temperature of 180°C-200°C and the further calendering rollers having decreasing temperatures.

2. Method according to claim 1, **characterised in that** the moulding composition has a melt index (190°C/21.6kg) of < 6g/10 min and a content of 0.5 to 3% by weight of bisstearoylethylenediamine and/or metal salts of carboxylic acids as processing aids.

3. Method according to one of claims 1 or 2, **characterised in that** the moulding composition has a filler content of < 10% by weight.

4. Method according to one of claims 1 or 2, **characterised in that** the moulding composition contains up to 30% by weight of aluminium hydroxide as filler.

## Revendications

1. Procédé de préparation de feuilles ou de plaques à partir d'une masse à mouler, qui est constituée principalement
a1) d'un PEhd ou d'un mélange de PEhd,
ou bien
a2) d'un mélange de PEhd et d'EVA,
et qui présente
b1) un indice de fluidité à chaud IFC (190°C/21,6 kg), défini selon la norme DIN 53 735, inférieur à 7 g/10 min,
ou bien
b2) un indice de fluidité à chaud IFC (190°C/21,6 kg), défini selon la norme DIN 53 735, inférieur à 10 g/10 min,
et contient de 0,5 à 3 % en poids de bis(stéaroyl)éthylènediamine et/ou de sels métalliques d'acides carboxyliques, utilisés comme adjuvants de traitement,
caractérisé en ce que l'on malaxe et plastifie la masse à mouler à une température d'environ 170-180°C, puis on en fait, par laminage à une température de 175-190°C, une feuille brute que l'on soumet ensuite à un calandrage, le premier cylindre de calandre se trouvant à une température de 180-200°C et les autres cylindres de calandre se trouvant à des températures qui vont en diminuant.

2. Procédé conforme à la revendication 1, caractérisé en ce que la masse à mouler présente un indice de fluidité à chaud (190°C/21,6 kg) inférieur à 6 g/10 min et contient de 0,5 à 3 % en poids de bis(stéaroyl)éthylènediamine et/ou de sels métalliques d'acides carboxyliques, utilisés comme adjuvants de traitement.

3. Procédé conforme à la revendication 1 ou 2, caractérisé en ce que la masse à mouler contient moins de 10 % en poids de charges.

4. Procédé conforme à la revendication 1 ou 2, caractérisé en ce que la masse à mouler contient jusqu'à 30 % en poids d'hydroxyde d'aluminium, utilisé comme charge.
